# EUROPÄISCHE PATENTSCHRIFT

(11) **EP 3 060 435 B1**
(45) Veröffentlichungstag und Bekanntmachung des Hinweises auf die Patenterteilung: **20.12.2017**
(21) Anmeldenummer: 14755369.7
(22) Anmeldetag: 22.08.2014
(51) Int. Cl.: B60R 21/16, B62J 99/00

(54) **VERFAHREN ZUM AKTIVIEREN EINER PERSONENSCHUTZVORRICHTUNG FÜR EIN KRAFTRAD UND PERSONENSCHUTZSYSTEM**
METHOD FOR ACTIVATING A SAFETY RESTRAINT SYSTEM FOR A MOTORCYCLE, AND ASSOCIATED SYSTEM
MÉTHODE D'ACTIVATION DE SYSTÈME DE RETENUE POUR UNE MOTOCYCLETTE, ET SYSTÈME ASSOCIÉ

(30) Priorität: 22.08.2013 DE 102013216711
(43) Veröffentlichungstag der Anmeldung: 31.08.2016
(73) Patentinhaber: Robert Bosch GmbH, 70442 Stuttgart (DE)
(72) Erfinder: MAKA, Torsten, 70499 Stuttgart (DE); CUVILLIER, Marielle, 70499 Stuttgart (DE); KOLATSCHEK, Josef, 71263 Weil Der Stadt (DE)
(86) Internationale Anmeldenummer: PCT/EP2014/067922
(87) Internationale Veröffentlichungsnummer: WO 2015/025040

(56) Entgegenhaltungen:
- EP-A1- 2 305 543
- DE-A1- 10 004 307
- DE-U1- 29 807 171
- DE-U1- 29 917 343

## Beschreibung

### Stand der Technik

Die vorliegende Erfindung bezieht sich auf ein Verfahren und eine Aktivierungsvorrichtung zum Aktivieren einer Personenschutzvorrichtung für ein Kraftrad, auf ein entsprechendes Computerprogrammprodukt, auf ein Personenschutzsystem, auf ein Kraftrad mit einem Personenschutzsystem sowie auf ein Verfahren zum Herstellen eines Kraftrads mit einer Personenschutzvorrichtung.

Motorräder sind mit Abstand das gefährlichste motorisierte Verkehrsmittel. Dies wird durch einen Vergleich der Unfallstatistiken für motorisierte Zweiräder und Pkws deutlich. So weist die GIDAS-Datenbank ("German In-Depth Accident Study") für Motorradfahrer im Vergleich zu Pkw-Insassen ein ca. 16-fach höheres Risiko aus, einen schweren oder tödlichen Unfall zu erleiden. Dies liegt unter anderem an der unterschiedlichen Fahrphysik und dem stets labilen Gleichgewichtszustand sowie an der besonderen physischen und psychischen Beanspruchung beim Motorradfahren. Darüber hinaus verfügen Motorräder über keine schützende Karosserie. Bei Kollisionen oder Stürzen sind Motorradfahrer trotz Schutzbekleidung ungeschützte Verkehrsteilnehmer.

Während in den letzten Jahren im Bereich der passiven Sicherheit im Pkw-Segment große Fortschritte zu verzeichnen waren, insbesondere auch durch die Einführung von Airbags, konnten Zweiradfahrer bislang kaum von dieser Entwicklung profitieren. Dies liegt nicht zuletzt an der immer noch mangelnden Verbreitung passiver Sicherheitssysteme im Motorrad. Die passiven Sicherheitssysteme für motorisierte Zweiräder beschränken sich zum Großteil auf die persönliche Schutzausrüstung des Aufsassen wie Helm oder Kleidung und passive konstruktive Elemente am Zweirad wie etwa Schutzbügel. Systeme wie Airbags oder Sicherheitsgurte mit Gurtstraffern, die im Pkw-Bereich seit Langem zur Mindestausrüstung gehören, sind bei motorisierten Zweirädern noch nicht überall Serienstand.

Die DE 197 29 627 A1 beschreibt ein herkömmliches Sicherheitssystem für ein Kraftrad. Hierbei handelt es sich um das derzeit einzige in Serie erhältliche Airbagsystem für Motorräder.

Die DE 100 04 307 A1 zeigt ein Airbag-System für ein Motorrad oder einen Motorroller, gemäß den jeweiligen Oberbegriffen von den Ansprüchen 3 und 4. Die EP 2 305 543 A1 zeigt ein Airbagsystem für Sattelritt-artige Fahrzeuge.

Die DE 298 07 171 U1 zeigt eine Schutzvorrichtung für Zweiradfahrer.

Die DE 299 17 343 U1 zeigt eine Sicherheitsvorrichtung an Motorrädern.

Gemeinsam ist allen herkömmlichen Systemen, dass sie zwischen dem Aufsassen und der Frontscheibe des Fahrzeugs angeordnet sind und sich der Airbag aus dem Tank oder einem hinter der Frontscheibe gelegenen Modul entfaltet.

### Offenbarung der Erfindung

Vor diesem Hintergrund werden mit der vorliegenden Erfindung ein Verfahren und eine Aktivierungsvorrichtung zum Aktivieren einer Personenschutzvorrichtung für ein Kraftrad, ein entsprechendes Computerprogrammprodukt, ein Personenschutzsystem, ein Kraftrad mit einem Personenschutzsystem sowie ein Verfahren zum Herstellen eines solchen Kraftrads gemäß den Hauptansprüchen vorgestellt. Vorteilhafte Ausgestaltungen ergeben sich aus den jeweiligen Unteransprüchen und der nachfolgenden Beschreibung.

Es wird ein Verfahren zum Aktivieren einer Personenschutzvorrichtung für ein Kraftrad vorgestellt. Hierbei weist die Personenschutzvorrichtung zumindest einen Airbag auf, der in einen von einem Fahrer des Kraftrads abgewandten Bereich vor einer Vordergabel und/oder vor eine Frontscheibe und/oder vor einen Frontscheinwerfer des Kraftrads entfaltbar ist. Das Verfahren umfasst folgende Schritte:
Einlesen eines Kollisionssignals, wobei das Kollisionssignal eine bevorstehende Kollision des Kraftrads repräsentiert; und
Bereitstellen eines Aktivierungssignals unter Verwendung des Kollisionssignals, um die Personenschutzvorrichtung zu aktivieren, um den zumindest einen Airbag zu entfalten.

Unter einer Personenschutzvorrichtung kann eine in einem Kraftrad verbaute Vorrichtung verstanden werden, die ausgebildet ist, um einen Fahrer des Kraftrads insbesondere bei einer Kollision des Kraftrads vor Verletzungen zu schützen. Zusätzlich oder alternativ kann die Personenschutzvorrichtung ausgebildet sein, um Beifahrer des Kraftrads und/oder andere Verkehrsteilnehmer bei der Kollision zu schützen. Dazu kann die Personenschutzvorrichtung beispielsweise einen oder mehrere Airbags aufweisen, die in verschiedenen Bereichen des Kraftrads entfaltbar sein können. Die Personenschutzvorrichtung kann weitere Sicherheitseinrichtungen wie etwa Gurtstraffer aufweisen, die bei einer Aktivierung der Personenschutzvorrichtung aktiviert werden können. Bei dem Kraftrad kann es sich um ein motorisiertes Zweirad wie etwa ein Motorrad oder einen Motorroller oder um ein Trike oder Quad handeln. Unter einem Airbag kann ein mit einem Gas befüllbarer Sack verstanden werden, der ausgebildet ist, um bei der Aktivierung der Personenschutzvorrichtung entfaltet zu werden. Der zumindest eine Airbag kann in einen von dem Fahrer des Kraftrads abgewandten Bereich vor einer Vordergabel und/oder vor eine Frontscheibe und/oder vor einen Frontscheinwerfer des Kraftrads entfaltbar sein, sodass die Vordergabel und/oder die Frontscheibe und/oder der Frontscheinwerfer zwischen dem zumindest einen Airbag und dem Fahrer angeordnet ist, sofern der zumindest eine Airbag entfaltet ist. Unter einem Fahrer kann ein Aufsasse des Kraftrads verstanden werden.

Unter einem Kollisionssignal kann ein von einem entsprechenden Sensor, beispielsweise einem in dem Kraftrad verbauten Beschleunigungs- oder Bildsensor, ansprechend auf eine bevorstehende Kollision des Kraftrads bereitgestelltes Signal verstanden werden. Unter einem Aktivierungssignal kann ein Signal verstanden werden, das von einem Steuergerät, das eine entsprechende Schnittstelle zum Einlesen des Kollisionssignals aufweist, unter Verwendung des Kollisionssignals bereitgestellt wird.

Der vorliegende Ansatz beruht auf der Erkenntnis, dass herkömmliche Airbags für Krafträder ausgebildet sein können, um sich ansprechend auf eine Erkennung einer Kollisionsgefahr in einem Bereich zwischen einem Fahrer und einer Frontscheibe eines Kraftrads zu entfalten. Mittels des vorliegenden Ansatzes kann eine passive Sicherheit des Fahrers und/oder eines Beifahrers deutlich erhöht werden, indem der Airbag ansprechend auf die Erkennung der Kollisionsgefahr in einem Bereich vor der Frontscheibe und/oder vor einer Vordergabel und/oder vor einem Frontscheinwerfer entfaltet wird. Dies hat den Vorteil, dass sich der Airbag zum Aufnehmen einer Kollisionsenergie auf einem Kollisionsgegner abstützen kann. Ferner kann dadurch einem Aufstellen eines Hinterrads des Kraftrads entgegengewirkt werden. Zur Erkennung der Kollisionsgefahr kann ein Kollisionssignal eingelesen werden. Unter Verwendung des Kollisionssignals kann dann ein Aktivierungssignal zum Aktivieren einer Personenschutzvorrichtung bereitgestellt werden, die ausgebildet ist, um den Airbag bei der Aktivierung zu entfalten. Mithilfe des vorliegenden Ansatzes kann ein bestehendes Personenschutzsystem mit einfachen und kostengünstig bereitzustellenden technischen Hilfsmitteln sinnvoll erweitert und verbessert werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach der vorstehend beschriebenen Ausführungsform verwendet wird, wenn das Programmprodukt auf einem Computer oder einer Vorrichtung ausgeführt wird.

Der vorliegende Ansatz schafft ferner eine Aktivierungsvorrichtung zum Aktivieren einer Personenschutzvorrichtung für ein Kraftrad. Hierbei weist die Personenschutzvorrichtung zumindest einen Airbag auf, der in einen von einem Fahrer des Kraftrads abgewandten Bereich vor einer Vordergabel und/oder vor eine Frontscheibe und/oder vor einen Frontscheinwerfer des Kraftrads entfaltbar ist. Die Aktivierungsvorrichtung weist folgende Merkmale auf: eine Einleseeinheit zum Einlesen eines Kollisionssignals, wobei das Kollisionssignal eine bevorstehende Kollision des Kraftrads repräsentiert; und

eine Bereitstellungseinheit zum Bereitstellen eines Aktivierungssignals unter Verwendung des Kollisionssignals, um die Personenschutzvorrichtung zu aktivieren, um den zumindest einen Airbag zu entfalten.

Unter einer Aktivierungsvorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Durch diese Ausführungsvariante des vorliegenden Ansatzes kann die dem Ansatz zugrunde liegende Aufgabe schnell und effizient gelöst werden.

Darüber hinaus schafft der vorliegende Ansatz ein Personenschutzsystem mit folgenden Merkmalen:
einer Personenschutzvorrichtung für ein Kraftrad, wobei die Personenschutzvorrichtung zumindest einen Airbag aufweist, der in einen von einem Fahrer des Kraftrads abgewandten Bereich vor einer Vordergabel und/oder vor eine Frontscheibe und/oder vor einen Frontscheinwerfer des Kraftrads entfaltbar ist; und
einer Aktivierungsvorrichtung gemäß einer vorangehend beschriebenen Ausführungsform, um die Personenschutzvorrichtung zu aktivieren, um den zumindest einen Airbag zu entfalten.

Unter einem Personenschutzsystem kann ein in das Kraftrad integriertes System zum Schützen des Fahrers und/oder der Beifahrer und/oder anderer Verkehrsteilnehmer vor Verletzungen bei einer Kollision verstanden werden. Das Personenschutzsystem kann die Personenschutzvorrichtung und die Aktivierungsvorrichtung aufweisen. Zusätzlich kann das Personenschutzsystem eine Mehrzahl weiterer Personenschutzvorrichtungen umfassen, die ausgebildet sind, um mittels der Aktivierungsvorrichtung aktiviert zu werden. Durch das Personenschutzsystem kann eine Sicherheit des Fahrers und/oder der Beifahrer und/oder anderer Verkehrsteilnehmer deutlich erhöht werden.

Gemäß einer Ausführungsform des vorliegenden Ansatzes kann ein Hauptanteil einer Aufpralloberfläche des zumindest einen Airbags einer Hauptfahrtrichtung des Kraftrads zugewandt sein, wenn der zumindest eine Airbag entfaltet ist. Unter einer Hauptfahrtrichtung kann eine Fahrtrichtung des Kraftrads verstanden werden, in die das Kraftrad fährt, wenn es vorwärtsbewegt wird. Unter einer Aufpralloberfläche kann eine Oberfläche des zumindest einen Airbags verstanden werden, die ausgebildet ist, um eine Aufprallenergie eines Aufpralls des Kraftrads auf ein Objekt aufzunehmen. Beispielsweise kann die Aufpralloberfläche erheblich größer sein als eine Stirnfläche des Kraftrads. Somit kann der Aufprall effizient gedämpft werden.

Gemäß einer Ausführungsform des vorliegenden Ansatzes kann ein vorbestimmter Anteil einer Oberfläche des zumindest einen Airbags dem Fahrer des Kraftrads zugewandt sein, wenn der zumindest eine Airbag entfaltet ist. Beispielsweise kann der vorbestimmte Anteil 20, 30 oder 40 Prozent der Oberfläche des zumindest einen Airbags betragen. Der zumindest eine Airbag kann beispielsweise derart entfaltbar sein, dass der Fahrer des Kraftrads bei einer Kollision auf den vorbestimmten Anteil der Oberfläche auftritt. Dadurch kann beispielsweise ein Vorwärtsschleudern des Fahrers verhindert werden. Indem der zumindest eine Airbag ferner die Funktion eines Fahrerairbags erfüllt, kann auf einen kostspieligen Einbau eines zusätzlichen Fahrerairbags verzichtet werden.

Der vorliegende Ansatz schafft ferner ein Kraftrad mit einem Personenschutzsystem gemäß einer der vorangehend beschriebenen Ausführungsformen.

Gemäß einer Ausführungsform des vorliegenden Ansatzes kann der Hauptanteil der Aufpralloberfläche des zumindest einen Airbags oberhalb eines Schwerpunkts des Kraftrads angeordnet sein, wenn der zumindest eine Airbag entfaltet ist. Indem sich der zumindest eine Airbag bei der Kollision mittels der Aufpralloberfläche oberhalb eines Schwerpunkts des Kraftrads auf dem Objekt abstützen kann, kann einem Aufstellen eines Hinterrads des Kraftrads entgegengewirkt werden.

Gemäß einer Ausführungsform des vorliegenden Ansatzes kann der zumindest eine Airbag an einem Rahmenelement des Kraftrads angebracht sein. Unter einem Rahmenelement kann ein Element eines tragenden Fahrgestells des Kraftrads verstanden werden. An dem Fahrgestell können beispielsweise Antriebselemente, Lenkung, Energiespeicher, Sitze sowie Verkleidungsteile des Kraftrads angebracht sein. Indem die Aufprallenergie über die Aufpralloberfläche des zumindest einen Airbags in das Rahmenelement eingeleitet wird, kann dem Aufstellen des Hinterrads mit einer besonders hohen Kraft entgegengewirkt werden.

Gemäß einer Ausführungsform des vorliegenden Ansatzes kann der zumindest eine Airbag in eine Frontverkleidung des Kraftrads integriert sein. Unter einer Frontverkleidung kann eine in einem Frontbereich des Kraftrads ausgebildete Verkleidung eines Fahrgestelles des Kraftrads verstanden werden. Mittels dieser Ausführungsform kann der zumindest eine Airbag besonders bauraum- und kostensparend realisiert werden.

Schließlich schafft der vorliegende Ansatz ein Verfahren zum Herstellen eines Kraftrads mit einer Personenschutzvorrichtung für ein Kraftrad. Hierbei weist die Personenschutzvorrichtung zumindest einen Airbag auf, der in einem von einem Fahrer des Kraftrads abgewandten Bereich vor einer Vordergabel und/oder vor einer Frontscheibe und/oder vor einem Frontscheinwerfer des Kraftrads entfaltbar ist. Das Verfahren umfasst einen Schritt des Fertigens des Kraftrads. Hierbei erfolgt das Fertigen des Kraftrads derart, dass der zumindest eine Airbag in dem Bereich vor der Vordergabel und/oder vor der Frontscheibe und/oder vor der Frontscheinwerfer des Kraftrads entfaltbar ist.

Die Erfindung wird nachstehend anhand der beigefügten Zeichnungen beispielhaft näher erläutert. Es zeigen:
- Fig. 1: ein Blockschaltbild eines Personenschutzsystems gemäß einem Ausführungsbeispiel der vorliegenden Erfindung;
- Fig. 2: eine schematische Darstellung eines Motorrads mit einem Personenschutzsystem gemäß einem Ausführungsbeispiel der vorliegenden Erfindung;
- Fig. 3: eine schematische Darstellung eines Motorrollers mit einem Personenschutzsystem gemäß einem Ausführungsbeispiel der vorliegenden Erfindung;
- Fig. 4: ein Ablaufdiagramm eines Verfahrens zum Aktivieren einer Personenschutzvorrichtung für ein Kraftrad gemäß einem Ausführungsbeispiel der vorliegenden Erfindung; und
- Fig. 5: ein Ablaufdiagramm eines Verfahrens zum Herstellen eines Kraftrads mit einer Personenschutzvorrichtung für ein Kraftrad gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

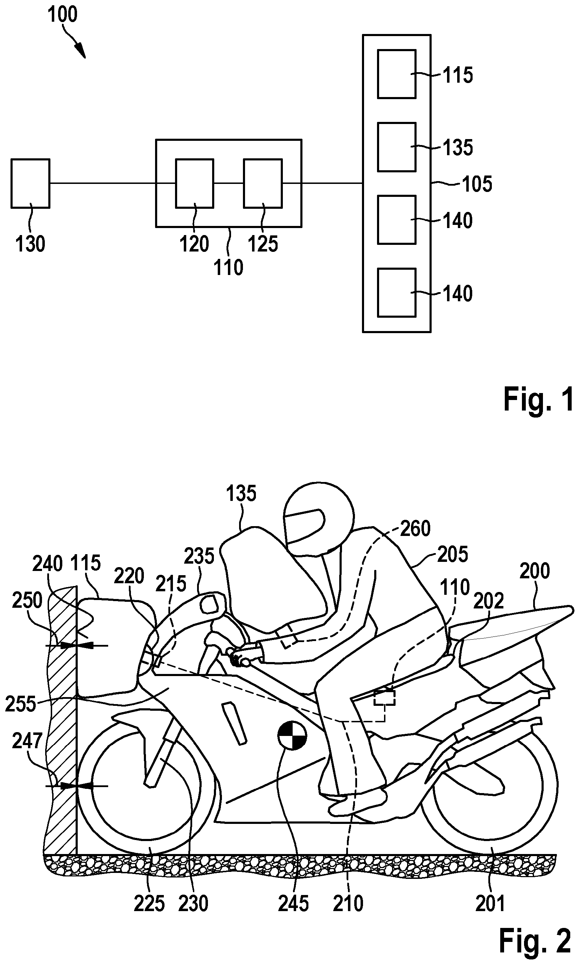

Fig. 1 zeigt ein Blockschaltbild eines Personenschutzsystems 100 gemäß einem Ausführungsbeispiel der vorliegenden Erfindung. Das Personenschutzsystem 100 weist eine Personenschutzvorrichtung 105 für ein in Fig. 1 nicht dargestelltes Kraftrad und eine Aktivierungsvorrichtung 110 auf. Die Personenschutzvorrichtung 105 weist einen Airbag 115 auf. Der Airbag 115 ist ausgebildet, um in einem von einem Fahrer des Kraftrads abgewandten Bereich vor einer Vordergabel und/oder vor einer Frontscheibe und/oder vor einem Frontscheinwerfer des Kraftrads entfaltet zu werden. Die Aktivierungsvorrichtung 110 weist eine Einleseeinheit 120 und eine Bereitstellungseinheit 125 auf. Die Einleseeinheit 120 ist mit der Bereitstellungseinheit 125 verbunden. Die Einleseeinheit 120 ist ausgebildet, um ein Kollisionssignal einzulesen. Das Kollisionssignal repräsentiert hierbei eine bevorstehende Kollision des Kraftrads. Ferner ist die Einleseeinheit 120 ausgebildet, um das Kollisionssignal an die Bereitstellungseinheit 125 auszugeben. Die Bereitstellungseinheit 125 ist ausgebildet, um das Kollisionssignal zu empfangen und unter Verwendung des Kollisionssignals ein Aktivierungssignal bereitzustellen. Die Bereitstellungseinheit 125 ist über eine Schnittstelle der Aktivierungsvorrichtung 110 mit der Personenschutzvorrichtung 105 verbunden. Die Personenschutzvorrichtung 105 ist ausgebildet, um das Aktivierungssignal zu empfangen und ansprechend auf das Empfangen des Aktivierungssignals aktiviert zu werden. Hierbei wird der Airbag 115 entfaltet.

Gemäß diesem Ausführungsbeispiel wird das Kollisionssignal von einem über eine weitere Schnittstelle der Aktivierungsvorrichtung 110 mit der Einleseeinheit 120 verbundenen Sensor 130 bereitgestellt. Der Sensor 130 ist beispielsweise als Beschleunigungssensor zum Erfassen der crashbedingten Verzögerung des Kraftrads, oder als Kamera zum Erfassen eines Umfelds des Kraftrads realisiert.

Ferner weist die Personenschutzvorrichtung 105 beispielhaft einen benachbart zu einem Fahrer des Kraftrads angeordneten Fahrerairbag 135 und zwei weitere Sicherheitseinrichtungen 140 wie etwa einen Beifahrerairbag oder einen Gurtstraffer auf. Die Personenschutzvorrichtung 105 ist gemäß diesem Ausführungsbeispiel ausgebildet, um ansprechend auf das Empfangen des Aktivierungssignals neben dem Airbag 115 den Fahrerairbag 135 und die weiteren Sicherheitseinrichtungen 140 zu aktivieren.

Fig. 2 zeigt eine schematische Darstellung eines Motorrads 200 mit einem Personenschutzsystem gemäß einem Ausführungsbeispiel der vorliegenden Erfindung. Fig. 2 zeigt einen frontalen Aufprall des Motorrads 200 auf eine Wand. Die Wand ist senkrecht zu einer ebenen Fahrbahn des Motorrads 200 angeordnet. Hierbei befindet sich das Motorrad 200 in einer annähernd horizontalen Lage. Auf einem Fahrersitz 202 des Motorrads 200 befindet sich ein Fahrer 205.

Das Personenschutzsystem weist die in Fig. 1 gezeigte Aktivierungsvorrichtung 110 sowie eine Personenschutzvorrichtung mit den in Fig. 1 gezeigten Airbags 115, 135 auf. Die Airbags 115, 135 sind je in einem entfalteten Zustand gezeigt. Die Aktivierungsvorrichtung 110 ist unterhalb des Fahrersitzes 202 angeordnet und über eine hier beispielhaft als Kabel dargestellte Datenverbindung 210 mit dem Airbag 115 verbunden. Ein Airbaggehäuse 215 des Airbags 115 ist benachbart zu einem Frontscheinwerfer 220 des Motorrads 200 angeordnet. Der Frontscheinwerfer 220 ist zwischen der Wand und einer Vordergabel 230 des Motorrads 200 angeordnet. Zwischen der Vordergabel 230 und dem Frontscheinwerfer 220 ist ferner eine Frontscheibe 235 angeordnet. Der Airbag 115 ist mit dem Airbaggehäuse 215 fest verbunden. Das Airbaggehäuse 215 ist ausgebildet, um den Airbag 115 in einem gefalteten Zustand bereitzustellen und ansprechend auf die Aktivierung der Personenschutzvorrichtung mit einem Gas zu befüllen, sodass der Airbag 115 im entfalteten Zustand zwischen der Wand und dem Frontscheinwerfer 220 sowie oberhalb eines Vorderrads 225 des Motorrads 200 angeordnet ist.

Gemäß diesem Ausführungsbeispiel ist der Airbag 115 mit einer Aufpralloberfläche 240 vorgesehen, die in eine Hauptfahrtrichtung des Motorrads 200 weist. In Fig. 2 weist die Aufpralloberfläche 240 in Richtung der Wand. Ferner ist die Aufpralloberfläche 240 annähernd senkrecht zu einer Längsachse des Motorrads 200 angeordnet. Die Aufpralloberfläche 240 weist beispielsweise keine oder nur eine geringe Krümmung auf.

Ferner ist die Aufpralloberfläche 240 oberhalb eines Schwerpunkts 245 des Motorrads 200 angeordnet. Der Schwerpunkt 245 ist in Fig. 2 beispielhaft in einem zu einem Knie des Fahrers 205 benachbarten Bereich des Motorrads 200 eingezeichnet.

Bei dem Aufprall des Motorrads 200 hat ein auf Höhe einer Nabe des Vorderrads 225 befindlicher Bereich des Vorderrads 225 Kontakt mit der Wand. Dieser Kontaktpunkt bildet einen unteren Lastpfad 247, über den eine Aufprallenergie des Aufpralls zumindest teilweise auf das Motorrad 200 übertragen wird. Der untere Lastpfad 247 ist mit zwei entgegengerichteten Pfeilen dargestellt.

Ferner hat ein Hauptanteil der Aufpralloberfläche 240 Kontakt mit der Wand. Der Hauptanteil entspricht hier beispielhaft einer Gesamtoberfläche der Aufpralloberfläche 240. Mittels der Aufpralloberfläche 240 wird der Airbag 115 großflächig an der Wand abgestützt. Der Airbag 115 bildet hierbei einen oberen Lastpfad 250, über den die Aufprallenergie zusätzlich zum unteren Lastpfad 247 derart auf das Motorrad 200 übertragen wird, dass das Hinterrad 201 bei dem Aufprall nur geringfügig von der Fahrbahn abhebt. Der obere Lastpfad 250 ist ebenfalls mit zwei entgegengerichteten Pfeilen dargestellt. Um die Aufprallenergie besser aufzunehmen, ist der Airbag 115 über das Airbaggehäuse 215 fest mit einem Rahmenelement 255 des Motorrads 200 verbunden. Das Rahmenelement 255 ist ausgebildet, um einen Hauptanteil eines Gewichts des Kraftrads zu tragen. Das Rahmenelement 255 ist in Fig. 2 schematisch mit gestrichelten Linien dargestellt.

Der Fahrerairbag 135 ist beispielhaft oberhalb eines Tanks des Motorrads 200 zwischen dem Fahrer 205 und der Vordergabel 230 angeordnet. Ein Fahrerairbaggehäuse 260 des Fahrerairbags 135 ist in den Tank integriert. Der Fahrerairbag 135 ist ausgebildet, um eine durch den Aufprall verursachte Vorwärtsbewegung des Fahrers 205 abzubremsen.

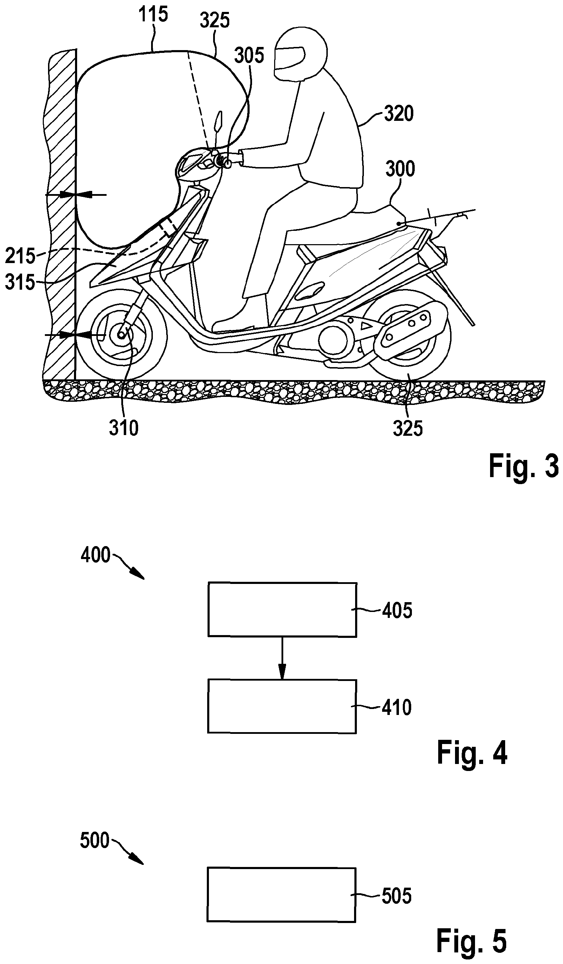

Fig. 3 zeigt eine schematische Darstellung eines Motorrollers 300 mit einem Personenschutzsystem gemäß einem Ausführungsbeispiel der vorliegenden Erfindung. Im Unterschied zu dem in Fig. 2 gezeigten Motorrad 200 weist der Motorroller 300 keinen Fahrerairbag und keine Frontscheibe auf. Der Airbag 115 weist ein deutlich größeres Volumen als in Fig. 2 auf. Beispielsweise ist das Volumen zwei- oder dreimal so groß wie in Fig. 2. Das Airbaggehäuse 215 ist unmittelbar unterhalb eines Lenkers 305 des Motorrollers 300 und vor einer Vordergabel 310 des Motorrollers angebracht. Der Motorroller 300 weist zusätzlich eine Frontverkleidung 315 wie etwa eine Kunststoff- oder Blechverkleidung auf, die einen der Hauptfahrtrichtung zugewandten vorderen Rahmenbereich des Motorrollers 300 umgibt. Der Airbag 115 und das Airbaggehäuse 215 sind in die Frontverkleidung 315 integriert.

Gemäß diesem Ausführungsbeispiel erstreckt sich der Airbag 115 horizontal von dem Lenker 305 bis zur Wand und vertikal von einem vorderen Schutzblech des Motorrollers 300 bis zu einem Kopfbereich eines Fahrers 320 des Motorrollers 300. Der Fahrer 320 sitzt hierbei aufrecht auf dem Motorroller 300. Ähnlich dem in Fig. 2 dargestellten Motorrad 200 wird der Motorroller 300 durch den Airbag 115 derart stabilisiert, dass ein Hinterrad 325 des Motorrollers 300 bei dem hier gezeigten Aufprall nicht oder nur wenig von der Fahrbahn abhebt.

Ein vorbestimmter Anteil 325 einer Oberfläche des Airbags 115 ist dem Fahrer 320 zugewandt. Der vorbestimmte Anteil 325 erstreckt sich beispielhaft über einen Bereich oberhalb des Lenkers 305. Der vorbestimmte Anteil 325 ist ausgebildet, um den Kopf des Fahrers 320 zu stützen, sofern der Fahrer 320 bei einem Aufprall nach vorn geschleudert wird. Somit übernimmt der in Fig. 3 dargestellte Airbag 115 die Funktion des in Fig. 2 dargestellten Fahrerairbags 135.

Es ist ebenfalls denkbar, dass der Airbag 115 durch geeignete konstruktive Maßnahmen in 2 Kammern geteilt ist, sodass der Druck im dem Fahrer zugewandten Teil ("Fahrerairbagteil") anders ist als im der Wand zugewandten Teil ("Upfront-Airbag-Teil). Dies hat zum Ziel, die beim Crash auftretenden Kräfte so zu optimieren, dass sowohl Fahrzeug als auch Fahrer optimal verzögert werden.

Im Folgenden wird ein Ausführungsbeispiel der vorliegenden Erfindung anhand der Figuren 1 bis 3 nochmals zusammenfassend beschrieben.

Ein Airbagsystem 100 für ein motorisiertes Zweirad 200, 300 ist ausgebildet, um einen Airbag 115 vor einer Frontscheibe 235, einer Vordergabel 230, 310 und/oder oberhalb eines Vorderrades 225 des Zweirads 200, 300 zu entfalten. Das Airbagsystem 100 kann auch als Personenschutzsystem 100 oder System 100 bezeichnet werden. Das Zweirad 200, 300 kann auch als Fahrzeug 200, 300, Kraftrad 200, 300, Motorrad 200 oder Motorroller 300 bezeichnet werden. Ferner kann der Airbag 115 auch Upfront-Airbag 115, Frontairbag 115 oder Bag 115 genannt werden. Der Airbag 115 wird hierbei beispielhaft aus einem in eine Frontstruktur des Zweirads 200, 300 integrierten Modul 215 entfaltet. Das Modul 215 kann auch als Airbaggehäuse 215 oder Gehäuse 215 bezeichnet werden.

Mithilfe des Systems 100 kann eine passive Sicherheit eines Aufsassen, insbesondere bei einem Frontcrash, erhöht werden. Ferner eignet sich das System 100 auch für kleine Fahrzeuge wie dem in Fig. 3 dargestellten Motorroller 300, bei dem eine Anordnung des Moduls 215 im Bereich eines Tanks oder einer Instrumententafel nicht möglich ist. Schließlich kann mithilfe des Systems 100 ein Aufsteigen eines Hinterrades 201, 325 beim Frontcrash reduziert werden, da sich das Fahrzeug 200, 300 bereits in einer frühen Crashphase mit dem Airbag 115 großflächig an einem Kollisionspartner abstützen kann.

Das vorgeschlagene Airbagsystem 100 besteht analog zu bekannten Motorradairbagsystemen aus einem Airbagsteuergerät 110 (auch Aktivierungsvorrichtung 110 genannt). Gegebenenfalls weist das Airbagsystem 100 eine vorausschauende Sensorik auf (auch Sensor 130 genannt), die ausgebildet ist, um den Fahrzustand des Zweirades 200, 300 kontinuierlich zu überwachen und bei Bedarf Rückhaltemittel auszulösen. Ferner weist das Airbagsystem 100 den Airbag 115 auf, der sich im Gegensatz zu den bekannten Systemen in der Motorradfrontstruktur befindet und sich an einem tragenden Rahmenteil 255 (auch Rahmenelement 255 genannt) abstützt.

In Fig. 1 ist eine grundsätzliche Systemarchitektur entsprechend dem Stand der Technik dargestellt. Der vorgeschlagene Upfront-Airbag 115 ist hierbei mit weiteren Systemen der passiven Sicherheit kombiniert, insbesondere mit Rückhaltesystemen wie Gurtsystemen oder weiteren Airbags. Die weiteren Systeme sind in Fig. 1 beispielhaft als Fahrerairbag 135 und weitere Sicherheitseinrichtungen 140 dargestellt.

Der Upfront-Airbag 115 reduziert ein Aufstellen des Fahrzeugs 200, 300 beim Frontalaufprall auf ein Hindernis, da ein Kontaktpunkt des Fahrzeugs 200, 300 mit einem Unfallgegner, normalerweise ein Vorderrad, unterhalb eines Schwerpunkts des Fahrzeugs 200, 300 liegt. Durch die auftretenden Kräfte wird beim Aufprall ein Drehmoment induziert, das für ein Aufstellen eines Fahrzeughecks sorgt. Wie in Fig. 2 gezeigt, stützt sich der Upfront-Airbag 115 oberhalb des Schwerpunkts 245 großflächig am Unfallgegner ab und reduziert so das Aufstellen. Der Upfront-Airbag 115 wirkt somit als Crashbox.

Das Aufstellen des Fahrzeugs 200, 300 tritt insbesondere in Kombination mit einem Gurtsystem auf und ist unbedingt zu verhindern, da sich der Kopf des Aufsassen an den Unfallgegner annähert und somit ein Verletzungsrisiko steigt. Es sind mehrere Funktionsvarianten des Systems 100 denkbar. Gemäß einer ersten Variante ist der Upfront-Airbag 115 ist ausgebildet, um Energie zu absorbieren und damit einen auf den Aufsassen wirkenden Kraftstoß zu reduzieren. Gemäß einer zweiten Variante ist der Upfront-Airbag 115 ausgebildet, um die Funktion einer Crashbox zu übernehmen und das Aufstellen des Fahrzeugs zu reduzieren. Gemäß einer dritten Variante ist der Upfront-Airbag 115 ausgebildet, um die Funktion einer Crashbox und gleichzeitig die Funktion eines klassischen Motorradairbags wie dem in den Figuren 1 und 2 gezeigten Fahrerairbag 135 zu übernehmen, der den Aufsassen zurückhält.

In Fig. 2 ist das System schematisch dargestellt. Der Upfront-Airbag 115 ist in die Frontstruktur des Fahrzeugs 200 integriert. Bei einem erkannten Frontcrash wird der Upfront-Airbag 115 aktiviert. Hierbei entfaltet sich der Upfront-Airbag 115 beispielhaft nach vorn. Das Gehäuse 215 ist ferner mit dem tragenden Rahmenteil 255 verbunden, sodass sich der Airbag 115 beim Kontakt mit einem Hindernis auf der einen Seite großflächig an dem Hindernis abstützen kann und auf der anderen Seite eine Kontaktkraft sicher in einen Rahmen des Fahrzeugs 200 eingeleitet werden kann. Durch diesen zweiten Lastpfad 250 wird ein Aufstellen des Fahrzeugs 200 reduziert.

Darüber hinaus kann durch eine Charakteristik des Airbags 115 ein definiertes Kraftniveau im oberen Lastpfad 250 eingestellt werden. Dies führt zu einem verbesserten Energieabbau, analog einer Knautschzone eines Kraftfahrzeugs. In Kombination mit anderen Rückhaltesystemen wie beispielsweise einem Gurtsystem für den Aufsassen oder einem weiteren Airbag kann so die auf den Aufsassen wirkende Kraft geeignet modelliert werden, um das Verletzungsrisiko zu senken. Falls kein anderes Rückhaltesystem vorhanden ist, kann der Upfront-Airbag 115 so gestaltet sein, dass der Aufsasse nach einer gewissen Vorverlagerung auf den Bag 115 auftrifft. Damit wird ein direkter Kontakt, etwa mit einem gegnerischen Fahrzeug, vermieden.

In Fig. 2 ist exemplarisch eine Kombination mit einem klassischen Tankairbag 135 (auch Fahrerairbag 135 genannt) dargestellt, der ausgebildet ist, um den Aufsassen im Crashfall zurückzuhalten. Es sind aber auch andere Kombinationen mit Systemen der passiven Sicherheit denkbar. Das in Fig. 2 gezeigte System ist primär für größere Fahrzeuge als Ergänzung zu bekannten Sicherheitssystemen geeignet.

Im Gegensatz dazu ist das in Fig. 3 gezeigte System besonders für kleinere Fahrzeuge wie beispielsweise Motorroller geeignet. Der Upfront-Airbag 115 übernimmt hier nicht nur die Rolle eines klassischen Fahrerairbags, sondern optional auch die Rolle der beschriebenen Crashbox. Er verhindert einerseits ein Aufstellen des Fahrzeugs 300 und hält andererseits den Fahrer 320 zurück. Das System ist in der Frontverkleidung 315 unterzubringen und damit auch für Fahrzeuge geeignet, bei denen aus baulichen Gegebenheiten an anderer Stelle wie etwa Sitzbank, Tank oder Instrumentenpanel kein geeigneter Platz für einen Airbag gefunden werden kann. Darüber hinaus ist das System kostengünstiger als eine 2-Airbag-Lösung.

Fig. 4 zeigt ein Ablaufdiagramm eines Verfahrens 400 zum Aktivieren einer Personenschutzvorrichtung für ein Kraftrad gemäß einem Ausführungsbeispiel der vorliegenden Erfindung. Die Personenschutzvorrichtung weist hierbei zumindest einen Airbag auf, der in einem von einem Fahrer des Kraftrads abgewandten Bereich vor einer Vordergabel und/oder vor einer Frontscheibe und/oder vor einem Frontscheinwerfer des Kraftrads entfaltbar ist. Zunächst erfolgt in einem Schritt 405 das Einlesen eines Kollisionssignals. Hierbei repräsentiert das Kollisionssignal eine bevorstehende oder gerade stattfindende Kollision des Kraftrads. In einem weiteren Schritt 410 wird ein Aktivierungssignal unter Verwendung des Kollisionssignals bereitgestellt, um die Personenschutzvorrichtung zu aktivieren. Dabei wird der zumindest eine Airbag entfaltet. Bei der Personenschutzvorrichtung kann es sich um die in den vorangegangenen Figuren gezeigte Personenschutzvorrichtung handeln.

Fig. 5 zeigt ein Ablaufdiagramm eines Verfahrens 500 zum Herstellen eines Kraftrads mit einer Personenschutzvorrichtung für ein Kraftrad gemäß einem Ausführungsbeispiel der vorliegenden Erfindung. Die Personenschutzvorrichtung weist hierbei zumindest einen Airbag auf, der in einem von einem Fahrer des Kraftrads abgewandten Bereich vor einer Vordergabel und/oder vor einer Frontscheibe und/oder vor einem Frontscheinwerfer des Kraftrads entfaltbar ist. In einem Schritt 505 wird das Kraftrad gefertigt. Hierbei erfolgt das Fertigen des Kraftrads derart, dass der zumindest eine Airbag in dem Bereich vor der Vordergabel und/oder vor der Frontscheibe und/oder vor dem Frontscheinwerfer des Kraftrads entfaltbar ist.

Das Verfahren 500 kann zum Herstellen eines Kraftrads, wie es in den vorangegangenen Figuren gezeigt ist, verwendet werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Aktivieren einer Personenschutzvorrichtung (105) für ein Kraftrad (200, 300), wobei die Personenschutzvorrichtung (105) zumindest einen Airbag (115) aufweist, der in einen von einem Fahrer (205, 320) des Kraftrads (200, 300) abgewandten Bereich vor einen Frontscheinwerfer (220) des Kraftrads (200, 300) entfaltbar ist, wobei das Verfahren (400) folgende Schritte umfasst:
Einlesen (405) eines Kollisionssignals, wobei das Kollisionssignal eine bevorstehende und/oder erfolgte Kollision des Kraftrads (200, 300) repräsentiert; und
Bereitstellen (410) eines Aktivierungssignals unter Verwendung des Kollisionssignals, um die Personenschutzvorrichtung (105) zu aktivieren, um den zumindest einen Airbag (115) zu entfalten.

2. Computerprogrammprodukt mit Programmcode zur Durchführung des Verfahrens (400) nach Anspruch 1, wenn das Programmprodukt auf einer Aktivierungsvorrichtung (110) ausgeführt wird.

3. Aktivierungsvorrichtung (110) zum Aktivieren einer Personenschutzvorrichtung (105) für ein Kraftrad (200, 300), wobei die Personenschutzvorrichtung (105) zumindest einen Airbag (115) aufweist, **dadurch gekennzeichnet, dass** der Airbag (115) in einen von einem Fahrer (205, 320) des Kraftrads (200, 300) abgewandten Bereich vor einen Frontscheinwerfer (220) des Kraftrads (200, 300) entfaltbar ist, wobei die Aktivierungsvorrichtung (110) folgende Merkmale aufweist:
eine Einleseeinheit (120) zum Einlesen eines Kollisionssignals, wobei das Kollisionssignal eine bevorstehende Kollision des Kraftrads (200, 300) repräsentiert; und
eine Bereitstellungseinheit (125) zum Bereitstellen eines Aktivierungssignals unter Verwendung des Kollisionssignals, um die Personenschutzvorrichtung (105) zu aktivieren, um den zumindest einen Airbag (115) zu entfalten.

4. Personenschutzsystem (100) mit folgenden Merkmalen:
einer Personenschutzvorrichtung (105) für ein Kraftrad (200, 300), wobei die Personenschutzvorrichtung (105) zumindest einen Airbag (115) aufweist, **dadurch gekennzeichnet, dass** der Airbag (115)
in einen von einem Fahrer (205, 320) des Kraftrads (200, 300) abgewandten Bereich vor einen Frontscheinwerfer (220) des Kraftrads (200, 300) entfaltbar ist; und
einer Aktivierungsvorrichtung (110) gemäß Anspruch 3, um die Personenschutzvorrichtung (105) zu aktivieren, um den zumindest einen Airbag (115) zu entfalten.

5. Personenschutzsystem (100) gemäß Anspruch 4, **dadurch gekennzeichnet, dass** ein Hauptanteil einer Aufpralloberfläche (240) des zumindest einen Airbags (115) einer Hauptfahrtrichtung des Kraftrads (200, 300) zugewandt ist, wenn der zumindest eine Airbag (115) entfaltet ist.

6. Personenschutzsystem (100) gemäß Anspruch 4 oder 5, **dadurch gekennzeichnet, dass** ein vorbestimmter Anteil (325) einer Oberfläche des zumindest einen Airbags (115) dem Fahrer (205, 320) des Kraftrads (200, 300) zugewandt ist, wenn der zumindest eine Airbag (115) entfaltet ist.

7. Kraftrad (200, 300) mit einem Personenschutzsystem (100) gemäß einem der Ansprüche 4 bis 6.

8. Kraftrad (200, 300) gemäß Anspruch 7, **dadurch gekennzeichnet, dass** der Hauptanteil der Aufpralloberfläche (240) des zumindest einen Airbags (115) oberhalb eines Schwerpunkts (245) des Kraftrads (200, 300) angeordnet ist, wenn der zumindest eine Airbag (115) entfaltet ist.

9. Kraftrad (200, 300) gemäß Anspruch 7 oder 8, **dadurch gekennzeichnet, dass** der zumindest eine Airbag (115) an einem Rahmenelement (255) des Kraftrads (200, 300) angebracht ist.

10. Kraftrad (200, 300) gemäß einem der Ansprüche 7 bis 9, **dadurch gekennzeichnet, dass** der zumindest eine Airbag (115) in eine Frontverkleidung (315) des Kraftrads (200, 300) integriert ist.

11. Verfahren (500) zum Herstellen eines Kraftrads (200, 300) mit einer Personenschutzvorrichtung (105) für ein Kraftrad (200, 300), wobei die Personenschutzvorrichtung (105) zumindest einen Airbag (115) aufweist, der in einen von einem Fahrer (205, 320) des Kraftrads (200, 300) abgewandten Bereich vor einen Frontscheinwerfer (220) des Kraftrads (200, 300) entfaltbar ist, wobei das Verfahren (500) folgenden Schritt umfasst:
Fertigen (505) des Kraftrads (200, 300), wobei das Fertigen (505) des Kraftrads (200, 300) derart erfolgt, dass der zumindest eine Airbag (115) in den Bereich vor den Frontscheinwerfer (220) des Kraftrads (200, 300) entfaltbar ist.

## Claims

1. Method (400) for activating a personal protection device (105) for a motorcycle (200, 300), wherein the personal protection device (105) has at least one airbag (115), which can be unfolded in a region facing away from a rider (205, 320) of the motorcycle (200, 300) in front of a front headlight (220) of the motorcycle (200, 300), wherein the method (400) comprises the following steps:
reading (405) a collision signal, the collision signal representing a collision of the motorcycle (200, 300) that is impending and/or has taken place; and
providing (410) an activation signal by using the collision signal in order to activate the personal protection device (105) in order to unfold the at least one airbag (115).

2. Computer program product comprising program code for carrying out the method (400) according to Claim 1 when the program product is executed on an activation device (110).

3. Activation device (110) for activating a personal protection device (105) for a motorcycle (200, 300), the personal protection device (105) having at least one airbag (115),
**characterized in that**
the airbag (115) can be unfolded in a region facing away from a rider (205, 320) of the motorcycle (200, 300) in front of a front headlight (220) of the motorcycle (200, 300), wherein the activation device (110) has the following features:
a reading unit (120) for reading a collision signal, the collision signal representing a collision of the motorcycle (200, 300) that is impending; and
a providing unit (125) for providing an activation signal by using the collision signal in order to activate the personal protection device (105) in order to unfold the at least one airbag (115).

4. Personal protection system (100) comprising the following features:
a personal protection device (105) for a motorcycle (200, 300), the personal protection device (105) having at least one airbag (115), **characterized in that**
the airbag (115) can be unfolded in a region facing away from a rider (205, 320) of the motorcycle (200, 300) in front of a front headlight (220) of the motorcycle (200, 300); and
an activation device (110) according to Claim 3 in order to activate the personal protection device (105) in order to unfold the at least one airbag (115).

5. Personal protection system (100) according to Claim 4, **characterized in that** a main proportion of an impact surface (240) of the at least one airbag (115) faces a main direction of travel of the motorcycle (200, 300) when the at least one airbag (115) is unfolded.

6. Personal protection system (100) according to Claim 4 or 5, **characterized in that** a predetermined proportion (325) of a surface of the at least one airbag (115) faces the rider (205, 320) of the motorcycle (200, 300) when the at least one airbag (115) is unfolded.

7. Motorcycle (200, 300) comprising a personal protection system (100) according to one of Claims 4 to 6.

8. Motorcycle (200, 300) according to Claim 7, **characterized in that** the main proportion of the impact surface (240) of the at least one airbag (115) is arranged above a centre of gravity (245) of the motorcycle (200, 300) when the at least one airbag (115) is unfolded.

9. Motorcycle (200, 300) according to Claim 7 or 8, **characterized in that** the at least one airbag (115) is attached to a frame element (255) of the motorcycle (200, 300).

10. Motorcycle (200, 300) according to one of Claims 7 to 9, **characterized in that** the at least one airbag (115) is integrated into a front fairing (315) of the motorcycle (200, 300).

11. Method (500) for producing a motorcycle (200, 300) comprising a personal protection device (105) for a motorcycle (200, 300), wherein the personal protection device (105) has at least one airbag (115) which can be unfolded in a region facing away from a rider (205, 320) of the motorcycle (200, 300) in front of a front headlight (220) of the motorcycle (200, 300), wherein the method (500) comprises the following step:
fabrication (505) of the motorcycle (200, 300), wherein the fabrication (505) of the motorcycle (200, 300) is carried out in such a way that the at least one airbag (115) can be unfolded in the region in front of the front headlight (220) of the motorcycle (200, 300).

## Revendications

1. Procédé (400) d'activation d'un dispositif de retenue de personne (105) pour une motocyclette (200, 300), dans lequel le dispositif de retenue de personne (105) présente au moins un coussin d'air (115), qui peut être déployé devant un phare avant (220) de la motocyclette (200, 300) dans une région éloignée d'un conducteur (205, 320) de la motocyclette (200, 300), dans lequel le procédé (400) comprend les étapes suivantes:
lire (405) un signal de collision, dans lequel le signal de collision représente une collision imminente et/ou survenue de la motocyclette (200, 300); et
produire (410) un signal d'activation en utilisant le signal de collision, pour activer le dispositif de retenue de personne (105), afin de déployer ledit au moins un coussin d'air (115).

2. Produit de programme informatique avec code de programme pour l'exécution du procédé (400) selon la revendication 1, lorsque le produit de programme est exécuté sur un dispositif d'activation (110).

3. Dispositif d'activation (110) permettant l'activation d'un dispositif de retenue de personne (105) pour une motocyclette (200, 300), dans lequel le dispositif de retenue de personne (105) présente au moins un coussin d'air (115), **caractérisé en ce que** le coussin d'air (115) peut être déployé devant un phare avant (220) de la motocyclette (200, 300) dans une région éloignée d'un conducteur (205, 320) de la motocyclette (200, 300), dans lequel le dispositif d'activation (110) présente les caractéristiques suivantes:
une unité de lecture (120) pour lire un signal de collision, dans lequel le signal de collision représente une collision imminente de la motocyclette (200, 300); et
une unité de production (125) pour produire un signal d'activation en utilisant le signal de collision, pour activer le dispositif de retenue de personne (105) afin de déployer ledit au moins un coussin d'air (115).

4. Système de retenue de personne (100) présentant les caractéristiques suivantes:
un dispositif de retenue de personne (105) pour une motocyclette (200, 300), dans lequel le dispositif de retenue de personne (105) présente au moins un coussin d'air (115), **caractérisé en ce que** le coussin d'air (115) peut être déployé devant un phare avant (220) de la motocyclette (200, 300) dans une région éloignée d'un conducteur (205, 320) de la motocyclette (200, 300), et
un dispositif d'activation (110) selon la revendication 3, pour activer le dispositif de retenue de personne (105) afin de déployer ledit au moins un coussin d'air (115).

5. Système de retenue de personne (100) selon la revendication 4, **caractérisé en ce qu'**une proportion principale d'une surface d'impact (240) dudit au moins un coussin d'air (115) est tournée vers une direction de roulage principale de la motocyclette (200, 300), lorsque ledit au moins un coussin d'air (115) est déployé.

6. Système de retenue de personne (100) selon la revendication 4 ou 5, **caractérisé en ce qu'**une proportion prédéterminée (325) d'une surface dudit au moins un coussin d'air (115) est tournée vers le conducteur (205, 320) de la motocyclette (200, 300), lorsque ledit au moins un coussin d'air (115) est déployé.

7. Motocyclette (200, 300) avec un système de retenue de personne (100) selon une des revendications 4 à 6.

8. Motocyclette (200, 300) selon la revendication 7, **caractérisée en ce que** la proportion principale de la surface d'impact (240) dudit au moins un coussin d'air (115) est disposée au-dessus d'un centre de gravité (245) de la motocyclette (200, 300), lorsque ledit au moins un coussin d'air (115) est déployé.

9. Motocyclette (200, 300) selon la revendication 7 ou 8, **caractérisée en ce que** ledit au moins un coussin d'air (115) est installé sur un élément de cadre (255) de la motocyclette (200, 300).

10. Motocyclette (200, 300) selon une des revendications 7 à 9, **caractérisée en ce que** ledit au moins un coussin d'air (115) est intégré dans un carénage frontal (315) de la motocyclette (200, 300).

11. Procédé (500) de fabrication d'une motocyclette (200, 300) avec un dispositif de retenue de personne (105) pour une motocyclette (200, 300), dans lequel le dispositif de retenue de personne (105) présente au moins un coussin d'air (115), qui peut être déployé devant un phare avant (220) de la motocyclette (200, 300) dans une région éloignée d'un conducteur (205, 320) de la motocyclette (200, 300), dans lequel le procédé (500) comprend l'étape suivante:
fabriquer (505) la motocyclette (200, 300), dans lequel la fabrication (505) de la motocyclette (200, 300) est effectuée de telle manière que ledit au moins un coussin d'air (115) puisse être déployé dans la région située devant le phare avant (220) de la motocyclette (200, 300).
